# EUROPEAN PATENT APPLICATION

(11) **EP 1 988 286 A1**
(43) Date of publication of application: **05.11.2008**
(21) Application number: 07425258.6
(22) Date of filing: 30.04.2007
(51) Int. Cl.: F03D 9/00

(54) **Wind turbine**

(71) Applicant: Gaia, Mario, 20060 Cassina De' Pecchi (Milano) (IT)
(72) Inventor: Gaia, Mario, 20060 Cassina De' Pecchi (Milano) (IT)
(74) Representative: Sangiacomo, Fulvia

(57) **Abstract**

A wind turbine with a horizontal or vertical wind rotor coupled directly to an electric generator. The electric generator comprises a continuous annular rotor fixed to the wind rotor and interacting magnetically with an electric stator connected to a fixed part and facing said annular rotor on a limited width arc of a circle. To establish a constant gap between the annular rotor and the stator of the electric generator, the radial position of said stator compared with the annular rotor is established and maintained by means of local skids having as a support and reference a part of the annular rotor, placed near the stator of the generator.

## Description

### Field of the Invention

This invention concerns a system for the exploitation of a source of renewable energy for the production of electrical energy and refers in particular to a wind turbine.

### State of the Technique

A wind turbine or aero-generator for the production of electric energy basically comprises a tower to the top of which is connected a one, two or more blade wind rotor , turning with a horizontal or vertical shaft which, by means of a rev multiplier, transmits the rotatory movement to an electric generator with a relative control system.

In this wind turbine sector, the predominant tendency has been to increase the unit capacity, ranging from average capacities of the plant of a few hundred kW to over a MW per unit.

To do this the dimensions of these machines has increased. At present the largest have a capacity of around 5 MW with the diameter of the rotor around 120 m.

The reasons behind making the machines larger and more powerful are usually:
- less visual impact in a wind farm with a few larger sized and more powerful machines compared with a wind farm with a large number of machines with less overall unit power installed;
- the possibility in this case of reaching higher levels and as a result to take advantage of the higher wind speeds at an altitude with corresponding increase in induced power per surface unit;
- a simplifying of the interconnected grid of the windfarm and a reduction in the extent of access roads thanks to a reduced number of machines;
- less costly in terms of maintenance and telecontrol because of the lower number of machines.

On the contrary, with the increase in diameter of the machines, certain aspects deteriorate:
- fundamentally, due to affinity laws, the rotor mass per surface unit increases as the diameter increases and hence also the cost of the rotor (and more in general than the machine) per unit power produced;
- the transmission ratio and the cost of the rev multiplier tend to increase:
   - transport of the blades and the cabin tend to become more costly and often there are serious limitations in the overhead grid, in particular for installations in mountain areas.

### Objective of the Invention

The objective of this invention is to solve the aforementioned problems of the known technique with the realisation of wind turbines with at least double the power or even several times higher compared to the present possibilities, using the present technology and without significant increases in costs per surface unit.

Given that the cost of the multiplier and the problems connected with it tend to increase more than proportionally to the surfaces of the blades, for future large machines a direct coupling between the wind rotor and the electric generator, a solution, what is more, already widely used, is undoubtedly preferable.

With the direct coupling solution, very large diameter generators must be used in order to avoid having to use large sized magnetic laminations as power increases; correspondingly it becomes costly to maintain a reduced acceptable level of the gap between the rotor and stator of the generator, due to inexactness in construction and thermal and mechanical deformations.

This invention is aimed at achieving the aforementioned objective and at resolving this other problem with the use of a wind turbine according to at least the part exemplified in claim 1.

### Brief Description of the Drawings

The invention will however be described in detail in the continuation made in reference to the enclosed indicative and not limiting drawings, in which:
Figs. 1 and 1a show side and rear schematic views of a horizontal axis wind turbine according to the invention;
Fig. 2 shows a section of the electric generator with a single stator element;
Fig. 3 shows a similar view with two stator elements inside and outside the rotor ring;
Fig. 4 shows a view similar to the one in Fig. 2 with a stator element equipped with sliding skids;
Figs. 5 and 5a show, respectively, the front and cross-section views of a stator element complete with sliding skids in the form of magnetic bearings;
Fig. 6 shows the stator assembled on oscillating devices;
Fig. 7 shows a part of a wind turbine with a pylon hub;
Fig. 8 shows a view similar to the one in Fig. 7, but with a hub made up of a wing contour lattice girders; and
Figs. 9 and 10 show two examples of vertical axis turbines, both with an electric generator having a slip-annular rotor fixed to the wind rotor.

### Detailed Description of the Invention

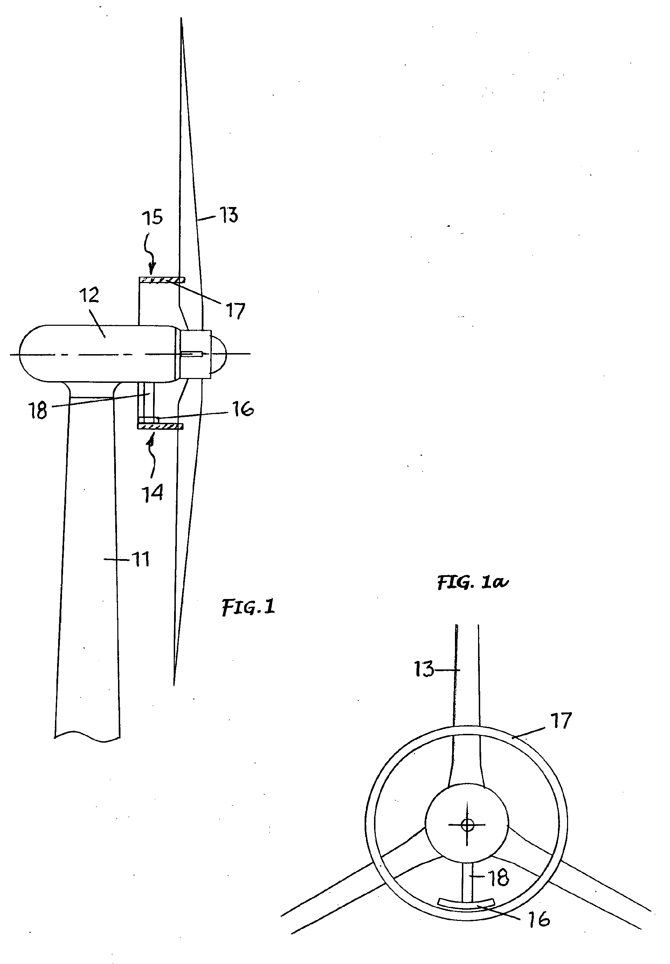

In said drawings, in particular in Figs. 1 to 8, number 11 indicates the tower of a wind turbine at the top of which is assembled a nacelle 12 supporting a horizontal axis, blade turbine rotor 13, turning under the action of the wind.

An electric generator 14, including a rotor 15 and at least one stator 16 (Fig. 1) is coupled directly to the turbine rotor 13. The nacelle can position itself and turn on a vertical axis to follow the direction of the wind. Alternatively, the tower itself can be assembled on a revolving base so as to change its position in block.

Furthermore according to the invention, the rotor 15 of the electric generator 13 is made up of a continuous slip annular rotor 17-herein after annular rotor - suitably configured, made up for example of a pack of magnetic laminations with squirrel-cage winding and a diameter preferably at least equal to 5% of the external diameter of the blades.

The stator 16, on the other hand, is limited to an arc of a circle, with a certain opening angle.

The stator 16 is connected to the nacelle 12 by means of a supporting structure 18 that guarantees both its tangential and axial positions. The radial position on the other hand can be guaranteed so as to achieve the distance required for the gap, both by means of a rigid connection to the nacelle and, preferably, by means of one or more sliding skids that maintain their radial position using the annular rotor 17 of the electric generator as a reference point. In this way the construction errors and deformations of said annular rotor and connection to the nacelle have no effect on the size of the gap which can be maintained at its optimum size to generate electricity.

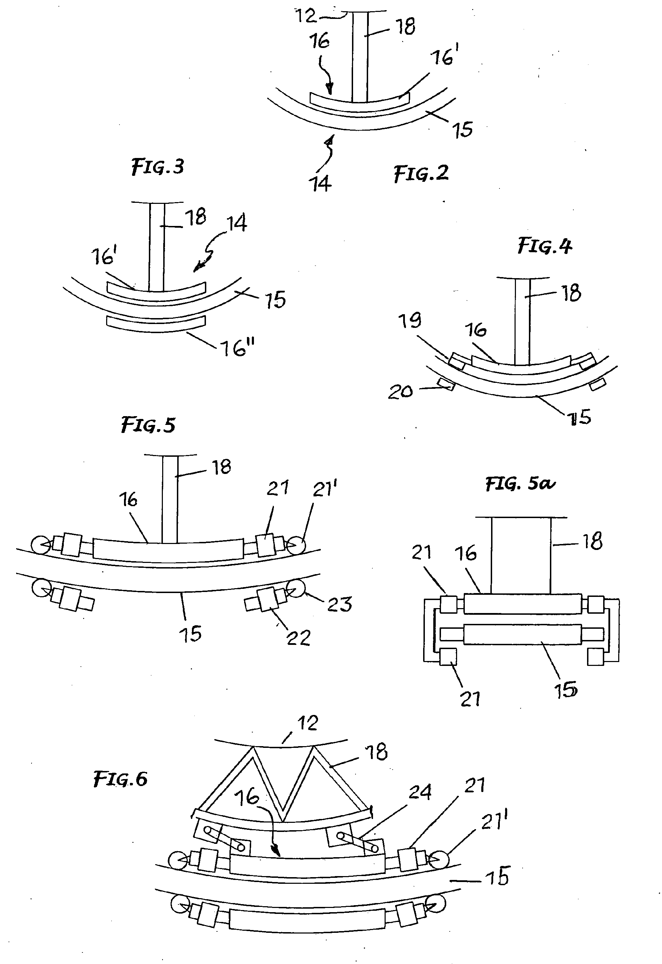

The stator sector 16 can be made up of a sole element 16' placed either inside (Fig. 2) or outside the annular rotor 17 or can be made up of two parallel elements 16, 16", one inside and one outside the annular rotor (Fig. 3) depending on the need to limit the radial forces connected to the generation of electricity and to other electrical needs, such as the improvement of yield, shape of wave, etc.

In this second case the two elements 16', 16" of the stator are rigidly connected to each other. The stator section, of each of them if more than one, may house the electric windings necessary to generate electricity, following the known techniques in the field of linear motors and generators.

In particular, should a permanent magnets system be used, the stator of each section will house the permanent magnets to generate the magnetic field. It is in fact preferable to position the magnets on the stator, given that it is in no way as wide as the rotor, consequently the mass of magnetic material is far less than in a realisation, nevertheless possible, using magnets distributed on the rotor.

To maintain a correct radial distance between stator and annular rotor skids can be used. The skids can be of different types, such as:
a) - sliding skids 19 positioned for example at the ends of the stator sector 16, sliding on the annular rotor 17 possibly with the help of a counter-shoe 20 to avoid rotor and stator detaching;
b) - roller skids, by which the stator sector is held in position by means of the rollers which rest against and follow a rail provided in the annular rotor 17;
c) - skids operating as magnetic bearings, with which the position of the skid is held "floating" on the annular rotor by means of electromagnets 21 (Fig. 5) with current controlled by distance sensors, according to a known and widely used technique for high speed shafts;

Whereas versions a) and b) may be noisy and rather delicate, version c) seems to be preferable as long as it is complete with emergency bearings 21' support the stator in the case of malfunction of one, or both of the magnetic bearings.

The emergency bearing, the same applies to every magnetic bearing, can be assisted by a counter bearing acting in the opposite direction, 22 and 23 respectively, as shown in Fig.5.

Furthermore, differently for example from systems with roller-track coupling in b), the magnetic bearings operate without contact and therefore guarantee silent functioning and long life both as regards to wear and gathering dirt.

In addition, using magnetic bearing means the gap distance can be changed during functioning to maintain the distance optimal, and also to compensate oscillating effects and resonance. In Fig. 6 there is an example of a connection between the nacelle and the stator sector by means of articulated arms 24 so as to allow radial oscillation.

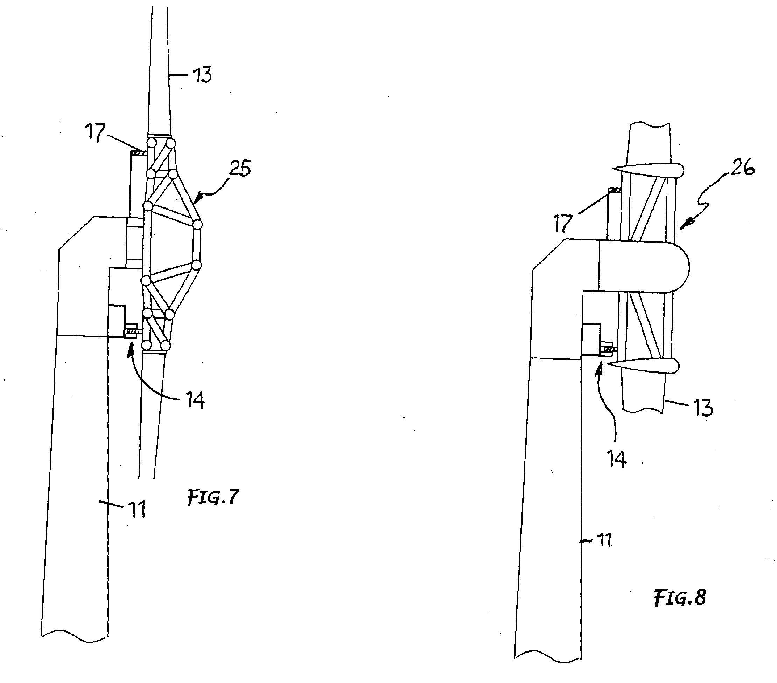

The solution proposed for a wind turbine with a annular rotor 17 associated with a stator 16 extending along a small arc of the circumference of said rotor and with a locally controlled gap, it is also suitable for reaching higher powers compared with the present levels, with equal length blades, by assembling the blades on a large diameter pylon hub 25 as shown in Fig. 7.

The pylon hub, basically permeable to the wind, enables usual size blades to be used, today 50-60 m, on a larger diameter. In this way the swept area can be increased even if the hub 25, configured in this way, does not participate, or its participation is very limited, in the production of power.

The pylon hub 25 supports the blades, preferably with variable pitch, at R distance from the rotation axis. As the R distance increases the swept area increases, and consequently the power.

However, an increase in power can be achieved also by a rectangular hub, when the wing-profile lattice girders 26 with fixed setting angle (Fig. 8). The reticular structure shown is illustrative without therefore representing the best solution possible.

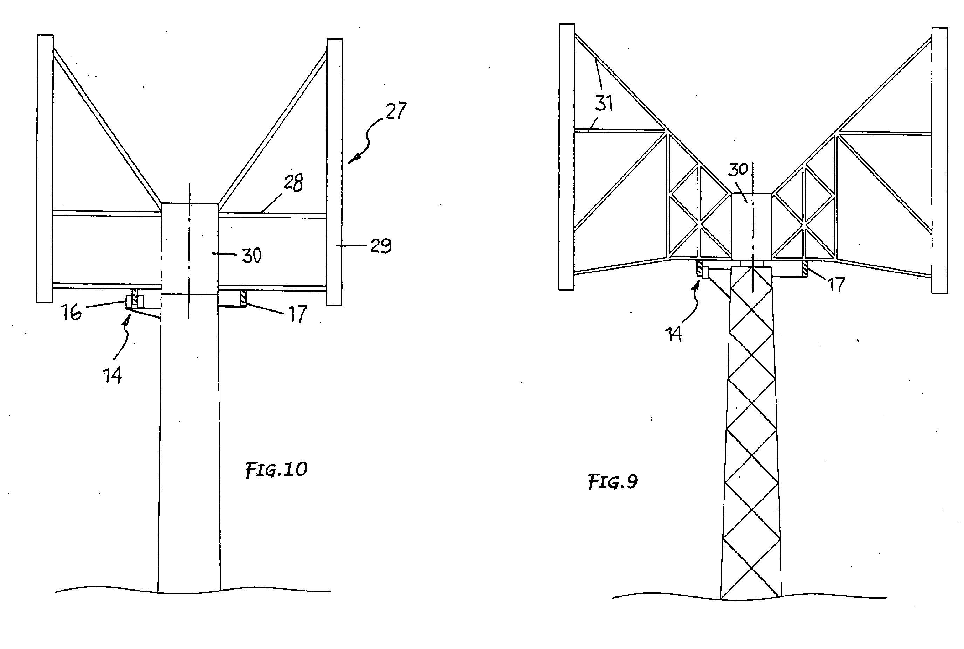

The present invention is applicable also for wind turbines with a vertical axis wind rotor 27, as shown in Figs. 9 and 10.

In these reproductions, the turbines differ in the configuration of the structure 28 that connects the blades 29 to the turning hub 30 and which can have or be without wing-shaped arms 31.

Each turbine is constructed however with an electric generator 14 with an annular rotor 15 fixed to the wind rotor 27 and a stator 16 limited to a circular sector, the rotor and stator of the electric generator being associated in a completely analogous way to what has been described above in relation to the example of a horizontal axis wind turbine.

## Claims

1. A wind turbine comprising a tower supporting a horizontal or vertical wind rotor turning due to the action of the wind, where the wind rotor has a turning structure supporting the blades and coupled directly to an electric generator, **characterised in that** said electric generator includes a continuous annular rotor fixed to the wind rotor and interacting magnetically with an electric stator connected to a fixed part and facing said annular rotor on a limited width arc of a circle, and by the fact that to establish a constant gap between the annular rotor and the stator of the electric generator, the radial position of said stator compared with the annular rotor is established and maintained by means of local skids having as a support and reference a part of the annular rotor, placed near the stator of the generator.

2. Wind turbine according to claim 1, **characterised in that** the annular rotor of the electric generator has a diameter at least equal to 5% of the external diameter of the turbine rotor blades.

3. Wind turbine according to claims 1 and 2, **characterised in that** the stator is supported radially by wheels that rest on tracks connected to the annular rotor.

4. Wind turbine according to claims 1 and 2, **characterised in that** the stator is supported at least radially by magnetic bearings fitted to maintain the stator at a controlled distance compared to the annular rotor.

5. Wind turbine according to any of the previous claims, **characterised in that** the stator is positioned inside the annular rotor.

6. Wind turbine according to claims 1 to 4, **characterised in that** the stator is positioned external to the annular rotor.

7. Wind turbine according to claims 1to 4 **characterised in that** the stator is positioned both inside and external to the annular rotor.

8. Wind turbine according to any of the previous claims, **characterised in that** part of the annular rotor has a friction surface for emergency braking and/or for stopping the turbine.

9. Wind turbine according to any of the previous claims, **characterised in that** the supporting structure of the blades of the wind rotor is made up of truss, that supports the annular rotor of the electric generator.

10. Wind turbine according to claim 9, **characterised in that** the truss made up of the supporting structure of the blades of the wind rotor is made up at least in part by the supporting wing-shaped profiles, keyed so as to provide a lift sufficient to generate a rotation moment to the wind generator.

11. Wind turbine according to any of the previous claims, **characterised in that** the whole supporting tower turns or not round a vertical axis.
